Europäisches Patentamt

**European Patent Office** (11) Publication number: **0 066 411**

Office européen des brevets **A1**

(12) **EUROPEAN PATENT APPLICATION**

(21) Application number: **82302538.2** (51) Int. Cl.³: **C 04 B 41/32**

(22) Date of filing: **18.05.82**

(30) Priority: **22.05.81 GB 8115809**

(43) Date of publication of application:
**08.12.82 Bulletin 82/49**

(84) Designated Contracting States:
**AT BE CH DE FR IT LI NL SE**

(71) Applicant: **W. Hawley & Son Limited**
**Colour Works**
**Duffield Derbyshire(GB)**

(72) Inventor: **Hawlex, Sefton Nevil**
**c/o W. Hawley & Son Limited Coleur Works**
**Duffield Derby(GB)**

(74) Representative: **Campbell, lain Angus et al,**
**Swindell & Pearson 44 Friar Gate**
**Derby DE1 1DA(GB)**

(54) **Concrete products.**

(57) Concrete product such as a building block or tile paving element having a thermoplastic or thermosetting continuous or non-continuous coating to render the product less susceptible to discolouration and erosion. Methods of treating a concrete product with such coatings by applying coatings to simultaneously or prior heated concrete products are also disclosed. The coating material may be applied as powder, aqueous dispersion or by dipping the product in liquid coating material.

EP 0 066 411 A1

## Concrete Products

The invention relates to the treatment of concrete products to prevent discolouration in use and is especially, but not exclusively, applicable to the treatment of bricks, roofing tiles and similar concrete products used for external building applications, also flagstones and interlocking or plain paviors. The term "concrete" is used herein to include calcium silicate (sand-lime) products.

Concrete products used for external building applications, such as roof tiles, are subjected to discolouration by efflorescence, surface etching and industrial atmospheric pollution. Efflorescence arises from the formation of a white film of mainly calcium carbonate on the surface of concrete products, normally during the early part of their life. This formation masks the face of pigmented products giving rise to a temporary loss of colour until the film itself is finally weathered away. Surface etching is a phenomenon arising from direct physical attack of the surface of the concrete by the elements, predominantly rain and frost. This results in a gradual small scale erosion of the surface, the smallest particles, which are usually the pigments used to colour the article, being removed first thereby gradually revealing the self-colour of the cement, sand or lime particles used to produce the product. Atmospheric pollution arises from the absorption by porous concrete products of dust, soot and other pollutants deposited from the atmosphere, principally by being brought down by rain. All these effects have the result of producing discolouration of exposed building products pigmented by conventional techiniques and it is an object of the present invention to provide a product which is less susceptible to discolouration than those hitherto produced.

We have now found that discolouration can be reduced or prevented by the application to concrete building products of a surface treatment consisting of applying to the surface selected synthetic resinous or plastics material to produce a hard surface coating on the product.

Accordingly the invention provides in one of its aspects a concrete building product the surface of which is coated with a heat-sensitive material which is solid at normal climatic termperatures.

The coating may be applied to pigmented or non-pigmented products and the heat sensitive material may itself be pigmented or non-pigmented dependent on requirements. The heat-sensitive material may be for example a thermoplastic material or a thermosetting resinous material. The preferred thermosetting resins are epoxy resins or polyester resins but many other thermosetting resins and combinations of thermosetting resins may be used. The preferred thermoplastics materials are polyethylene or polyurethane but many other thermoplastics materials and combinations of thermoplastics materials may be used.

The invention provides in another of its aspects a method of protecting a concrete building product comprising the steps of applying a heat-sensitive material to the product during or subsequent to heating of the material to form a protective coating on the surface of the product.

The heat sensitive material normally in powder or granule form, may be applied to the surface of the concrete product in any convenient manner and is heated during or after application to bond it securely to the surface of the concrete product being treated. The heating temperature and time are selected to allow the material to melt, flow and penetrate and on subsequent cooling harden and adhere to the surface of the concrete product.

It is preferred that the concrete product should be pigmented in the body and the surface coating of heat sensitive material appropriately pigmented. Non-pigmented heat sensitive materials however may be applied to the surface of pigmented concrete products where it is desired to protect the products from surface defects while retaining and intensifying the colour of the pigmented concrete product. Pigmented surface coatings of the heat sensitive material may also be applied to non-pigmented concrete products although this may result in blemishes should the surface be chipped prior to laying revealing the non-pigmented surface.

In one arrangement a pigmented or non-pigmented thermosetting resin is applied to the surface of a concrete product by means of a flame gun which serves to heat and apply the resin simultaneously and eliminate the need for subsequent heating to effect curing of the resin. The resin is supplied to the flame gun in powdered or granular form. Thermoplastic material may also be used in such an arrangement.

In an alternative technique the heat sensitive material may be applied by means of an electrostatic powder gun in which a charge is induced on the surface of the particles of heat sensitive material in powder or granular form passing through

-4-

the gun such that the particles adhere to the earthed surface
of the concrete product. Powdered or granular particles may
alternatively be blown on to the surface of the product by
compressed air or steam. In a further embodiment the surface of
the product may be sprayed with an aqueous dispersion of the
powdered heat sensitive material using suitable spraying equipment.
Alternatively the product may be dipped into an aqueous dispersion
of the powdered heat sensitive material. The coating may
alternatively be applied by dipping the product into aerated or
fluidised beds of the heat sensitive material in powder or
granular form or the material may be sprinkled on to the surface
of the product either direct or via a roller.

In most cases it is necessary after application of the resin
coating to effect heating at elevated temperatures. This, in the
case of thermosetting resinous material is to cure it, and in the
case of thermoplastics material is to melt it. This may be effected
by direct or indirect heating using gas, electricity, oil, solid
fuel, superheated steam, mineral oil heating systems, infra-red
or micro-wave heating elements. Preferably the coating is applied
to a preheated concrete product.

The application of heat sensitive material coatings to concrete
products in the manner described protects the surface of the product
from surface etching and atmospheric pollution and has also been
found to reduce or prevent colour masking of the surface by efflorescence.

The coating applied to the concrete product may be of
various thicknesses, the preferred thickness is just sufficient
to provide an adequate seal against the ingress of water. In so protecting the surface it also provides a cosmetic coating which produces a coloured concrete product of greater long term permanence and uniformity.

The coating material, especially if it is a resin, may be chosen so that on application it leaves a matt or gloss finish. In the latter case the coating will be thicker than in the former case where the coating may comprise a plurality of globules of coating which may be microscopically discontinuous. In this way the original appearance of the concrete is maintained.

The term heat sensitive as used herein means softened initially by heat and after subsequent cooling rendered solid and is intended to embrace thermoplastic materials and thermosetting resinous materials.

Claims

1. A concrete building product characterised in that it has a surface coated with a heat-sensitive thermoplastic or thermosetting resinous material which is solid at normal climatic temperatures.

2. A concrete building product as claimed in claim 1 characterised in that the thermosetting resinous material comprises at least one resin selected from epoxy resins.

3. A concrete building product as claimed in claim 1 characterised in that the thermosetting resinous material comprises at least one resin selected from polyester resins.

4. A concrete building product as claimed in claim 1 characterised in that the thermoplastic material comprises polyethylene.

5. A concrete building product as claimed in claim 1 characterised in that the thermoplastic material comprises polyurethane.

6. A concrete building product as claimed in any one of claims 1 to 5 characterised in that the coating of the heat sensitive material is composed of a plurality of discrete areas of heat sensitive material.

7. A method of protecting a concrete building product as characterised by the steps of applying a heat-sensitive thermoplastic or thermosetting material to the product during or subsequent to heating of the material to form a protective coating.

8. A method of protecting a concrete building product as claimed in claim 7 characterised in that the product is heated prior to the application of the heat sensitive material so that the said material is adequately heated after its application.

-7-

9.  A method of protecting a concrete building product as claimed in claim 7 or 8 characterised in that powdered or granular particles are blown onto the surface of the concrete building product by a compressed fluid.

0066411

European Patent
Office

Application number

EP   82 30 2538

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 008 284  (B. HARING) <br> * Claim; page 3, lines 22-27 * | 1-3,9 | C 04 B   41/32 |
| X | US-A-3 953 623  (J.C. BAS) <br><br> *  Column 4, lines 11-18; claim 1 * | 1,2,4, 6-9 | |
| X | CHEMICAL ABSTRACTS, vol. 89, no. 16, 16th October 1978, page 323, no. 134673t, Columbus, Ohio, USA & JP - A - 78 46321 (IDEMITSU KOSAN CO., LTD.) 25-04-1978  * Abstract * | 1,4,7 | |
| A | CHEMICAL ABSTRACTS, vol. 89, no. 4, 24th July 1978, page 336, no. 29757a, Columbus, Ohio, USA & JP - A - 77 93434 (MATSUSHITA ELECTRIC  WORKS, LTD.) 05-08-1977 * Abstract * | 1,5 | TECHNICAL FIELDS SEARCHED (Int. Cl. ³) <br><br> C 04 B   41/00 |

The present search report has been drawn up for all claims

| Place of search | Date of completion of the search | Examiner |
|---|---|---|
| THE HAGUE | 25-08-1982 | DAELEMAN P.C.A. |